(19) Europäisches Patentamt European Patent Office Office européen des brevets

(11) **EP 4 016 461 B1**

(12) **EUROPEAN PATENT SPECIFICATION**

(45) Date of publication and mention
of the grant of the patent:
**11.03.2026 Bulletin 2026/11**

(21) Application number: **20214593.4**

(22) Date of filing: **16.12.2020**

(51) International Patent Classification (IPC):
***G06T 11/00*** *(2026.01)*

(52) Cooperative Patent Classification (CPC):
**G06T 12/10;** G06T 2211/408

(54) **METHOD FOR OBTAINING AT LEAST FOUR RADIOGRAPHIC PROJECTIONS AND CORRESPONDING RECONSTRUCTION DEVICE**

VERFAHREN ZUR ERZEUGUNG VON MINDESTENS VIER RADIOGRAFISCHEN PROJEKTIONEN UND ZUGEHÖRIGE REKONSTRUKTIONSVORRICHTUNG

PROCÉDÉ D'OBTENTION D'AU MOINS QUATRE PROJECTIONS RADIOGRAPHIQUES ET DISPOSITIF DE RECONSTRUCTION CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.06.2022 Bulletin 2022/25**

(73) Proprietor: **Fraunhofer-Gesellschaft zur Förderung
der angewandten Forschung e.V.
80686 München (DE)**

(72) Inventor: **ZABLER, Simon
91058 Erlangen (DE)**

(74) Representative: **Pfitzner, Hannes et al
Schoppe, Zimmermann, Stöckeler
Zinkler, Schenk & Partner mbB
Patentanwälte
Radlkoferstraße 2
81373 München (DE)**

(56) References cited:
• **CHENG ZHIWEI ET AL: "Improved projection-based energy weighting for spectral CT",** RADIATION DETECTION TECHNOLOGY AND METHODS, vol. 3, no. 3, 9 April 2019 (2019-04-09), XP055803077, ISSN: 2509-9930, DOI: 10.1007/s41605-019-0106-2
• **ULLHERR M ET AL: "SNR Spectra as a Quantitative Model for Image Quality in Polychromatic X-Ray Imaging", ARXIV.ORG, CORNELL UNIVERSITY LIBRARY, 201 OLIN LIBRARY CORNELL UNIVERSITY ITHACA, NY 14853,** 30 April 2019 (2019-04-30), XP081269124

EP 4 016 461 B1

**Description**

Embodiments of the present invention refer to a method for obtaining at least four radiographic projections of an object and to a method for a CT reconstruction of the object. Further embodiments refer to a corresponding computer program. Another embodiment refers to an image reconstruction device for reconstruction of the object based on at least four radiographic projections of the object. Another embodiment refers to an X-ray CT apparatus. Embodiments of the present invention have the aim to improve CT reconstruction of objects with strong varying X-ray path lengths using local transmission weighting of two or more congruent scans employing separate high- and low- energy spectrums.

When X-raying an object, e.g., for a CT reconstruction, the dimensions of the object, especially the dimensions along the different path lengths through the object have a significant influence to the image. In order to avoid beam-hardening effects, which appear as imaging artifacts from the volume reconstruction, the X-ray parameter, e.g., the energy spectrum is adapted to the object to be X-rayed. For example, an object having a low density or small dimensions can be X-rayed by use of a low energy spectrum, while an object having a high density or a large dimension would preferably X-ray using high-energy spectrum. In case the geometry of the object to be X-rayed varies along the different projections, for each projection the parameters have to be adapted. For most NDT applications of CT, this problem is ignored, i.e., the high-energy scan is supposed to be the best possible result. If admissible, the sample is kept down to the smallest possible size in order to keep the energy spectrum as soft as possible. In those cases where cutting is not an option, either exposure time or emission current are increased for compensating the low SNR across the shorter path lengths. Medical CT routinely applies this scheme for optimizing as SNR within a single CT scan with respect to effective patient dose. The letter scales with the emission current.

The publication CHENG ZHIWEI ET AL: "Improved projection-based energy weighting for spectral CT", RADIATION DETECTION TECHNOLOGY AND METHODS, vol. 3, no. 3, 1 September 2019, XP055803077 shows a medical x-ray CT scanner enabling to increase the contrast of low-density materials.

It is an objective of the present invention to provide a CT reconstruction approach avoiding the above drawbacks. In detail, the objective of the present invention is to provide a concept having a better tradeoff between variability of objects to be analyzed, usability with respect to the settings and image quality.

This objective is solved by the subject-matter of the independent claims.

Embodiments of the present invention provide a method for obtaining at least four radiographic projections of an object in at least two different perspectives. Expressed in other words, this means that two of the four radiographic projections are recorded from a first of the two different perspectives, while the other two radiographic projections are recorded from another perspective. The two radiographic projections belonging to one perspective may be recorded using different energy spectrums, so that a first of the two radiographic projections may comprise a low energy portion (LE), while the second radiographic projection may comprise a high energy portion (HE). Consequently, for each of the two different perspectives, a low energy projection and a high energy projection is taken. The four projections are used in a computed thermography (CT) measurement, e.g., for reconstructing volume metric properties at ray intersections from said at least two perspectives of the object. The method comprises the following steps:

- obtaining at least two first projections of the at least four projections from one first perspective which includes the ray attenuation belonging to a first path length through the object (e.g. approximating the longest path length, within a given set of rays and perspectives (CT geometry)), wherein the at least two first projections of the at least four projections from the one first perspective being recorded (e.g. from this perspective) using different energy spectra (which constitute the recorded intensities in congruent rays; note the first may be the low-energy (LE) portion the second the high-energy (HE) portion of this perspective);

- obtaining at least two second projections of the at least four projections from at least one second perspective which includes the ray attenuation belonging to a second path length through the object (e.g. approximating the shortest path length) through the object (within a given set of rays /perspectives), wherein the at least two second projections of the at least four projections from the one second perspective being recorded (e.g. from this perspective) using different energy spectra ( which constitute the recorded intensities in congruent rays; note one may be the LE portion the second the HE portion of this second perspective); and

- ray-wise weighting and summing the at least two first projections and at least two second projections using a cost or a quality function.

Embodiments of the present invention are based on the finding that there exists a cost function S(A) which can be used for weighting the logarithmic transmissions A. By use of a linear combination of the radiographic projections, at least of the two radiographic projections belonging to one perspective, i.e., the HE and the LE projection (the SNR can be optimized, while compensating drawbacks of the HE scan). Here, the numerical weighting for the HE and LE combination is local. This means for each pixel and/or each angle/perspective. The weights can be computed from a cost or a quality function, e.g., the SNR, which- in turn- depends on transmission. An optional scaling of the HE values can be compared to a low pass filtering, wherein this approach enables that the high frequency information of the LE scan can be maintained. The proposed method is simple in terms of application. Most CT scanners allow for performing two sequential scans, one LE, the other HE on the same object. One might also be shortening the exposure time for each scan in order to not exceed the scan time /dose of a single HE scan. Applying this method only benefits objects that display strongly varying path lengths, hence it is ineffective for cylindrical objects of homogeneous density. For the former, the proposed method is clearly outperforming Computed Laminography (CL) for objects which are "not flat" (e.g. of complex geometry like a cast or machine housing) and /or which feature out-of-plane structural details which are of interest (but not perceived by CL). Concrete embodiments of the present invention provide the advantage that an optimal/isotropic image quality can be generated, even if the object has a higher aspect ratio (larger than 1:3) or when the object significantly differs from a cylindrical shape. The image quality benefits a high energy scan (HE) with the advantages of a low energy scan (LE), especially the better SNR of the latter.

According to embodiments, the method further comprises obtaining additional projections (typically hundreds) from additional perspectives, wherein the at least two additional projections from one additional perspective being recorded using different energy spectra (for example each perspective may be represented by at least two congruent projections / LE and HE portions). According to embodiments, the method comprises the further step of computing new projections by the ray-wise weighting and summing the at least two first projections and at least two second projections (e.g. by the ray-wise weighting and summing LE and HE portions in said at least two congruent perspectives) and/or by ray-wise weighting and summing of filtered and/or masked versions of the at least two first projections and at least two second projections (e.g. using a reasonable metric for weighting all rays in the at least two perspectives).

Note, the step of weighting is performed while combining the at least two projections with respective determined weights of the at least two projections, preferably in a linearly weighting combination (summation).

According to embodiments, the first (longest) and the second (shortest) path length within the set of perspectives, differ significantly from one another. Note, according to embodiments, the different perspectives are realized by a simple axial rotation (i.e. (A) of the object, or (B) of the measurement device (i.e. source and detector) revolving around the object (circular CT geometry); note said measurement device typically comprises at least one radiation source and at least one area- or line-detector). Additionally or alternatively, the different perspectives result from a specific static arrangement of multiple sources and detector units around the object or wherein the different perspectives result from non-circular motion, either of the object or of the measurement device (Examples for non-circular CT-geometries are helical- or spiral-CT, Robotic CT, Translational CT). According to embodiments, the cost function includes image quality metrics, which depend on the ray's transmission. Additionally or alternatively, the cost function defines the weighting of the at least two first projections with respect to each other and the at least two second projections with respect to each other (the LE and HE portions). Note, the image quality metric may be one of the following: a temporal signal-to-noise ratio (SNR) function, a spatial signal-to-noise ratio (SNR) function, a contrast-to-noise ratio (CNR) function, an inverse cost function, e.g. a variance function, or an entropy function, e.g. a local Shannon entropy metric.

According to embodiments, the cost function is directly computed from transmission images of the at least two first projections and/or of the at least two second projections (i.e. of LE and HE portions in at least one perspective). Alternatively, the cost function is obtained from a dedicated set of transmission images, which are either obtained by step-wise increasing acceleration voltages of the X-ray anode and /or by inserting attenuation filters of increasing thickness (typically few millimeters of metal, e.g. aluminum, copper) between anode and object. According to embodiments, the at least two projections and/or the at least two second projections (the LE and HE portions) are obtained by using a double-layered line- or area detector, wherein the first (pixel) layer records a LE projection, and - optionally with a metallic back-plate - acts as attenuation filter for the second (pixel) layer recording a HE projection. Note, the at least two first projections and/or the at least two second projections (the LE and HE portions) are obtained by using at least two X-ray sources and an equivalent number of adjacent (line or area) detectors. (Note one of said at least two source and detector pairs is configured for recording the LE portion, the second is configured for recording the HE portion in congruent CT geometry. Therefore the at least two source and detector pairs are positioned for allowing to measure congruent rays, e.g. by placing them orthogonally on a circular circumference around the object). According to embodiments, the at least two first projections and/or the at least two second projections (the LE and HE portions) are obtained by employing electronic energy thresholds set in the pixels of photon counting detectors, also known as directly converting detectors.

According to embodiments, the cost function is a set of user-defined values. Alternatively, the cost function is defined by at least one analytic mathematical function, e.g. a polynomial, a Gaussian, a Lorentzian, a step-wise linear shape, preferably a linearly decreasing shape or V-shape, a step or top-hat function, or a cosine.

According to embodiments, the weight for each ray of the at least two first projections and/or the at least two second projections (the LE and HE portions) is normalized with respect to the sum of cost function values for a set of congruent rays from the LE and the HE portions.

According to embodiments, the weights are given by the formula:

$$\omega_{\theta,i}^{LE} = \frac{s\left(\overline{p_{\theta,i}^{LE}}\right)}{s\left(\overline{p_{\theta,i}^{LE}}\right) + s\left(\overline{p_{\theta,i}^{HE}}\right)}, \qquad \text{and} \qquad \omega_{\theta,i}^{HE} = \frac{s\left(\overline{p_{\theta,i}^{HE}}\right)}{s\left(\overline{p_{\theta,i}^{LE}}\right) + s\left(\overline{p_{\theta,i}^{HE}}\right)};$$

$s(x)$ - is the cost function value for the ray $x$; $\overline{x}$ indicates that the transmission at $x$ is obtained after averaging its nearest neighbors for reducing noise; averaging can be realized by linear filtering (mean, Gauss, bi-linear interpolation) or by applying a non-linear median filter; where $\omega$ - the weight applying to each pixel /ray; where $\overline{p_{\theta,i}^{y}}$ - a low-pass filtered respective portion ($y \in \{LE, HE\}$) of a respective projection; $\theta$ representing the perspective, e.g. the rotation angle for circular CT geometry; i marks the pixel index.

According to another embodiment, the method further comprises application of a linear or a non-linear filtering, preferably a low-pass, noise reduction filter, to the at least two first projections and/or the at least two second projections (the LE and HE portions) prior to or after performing the step of weighting. Note, the noise reduction filtering is one of the following: a pixel wise filter along the direction of the sequence of perspectives (projection angle in the case of circular CT), a non-linear median filter, a mean filter, a Gaussian filter, a Lorentz filter, a Wiener filter. According to embodiments, the method may further comprise the following steps:

- obtaining new projections by summing the unfiltered weighted portions; applying a linear or a non-linear filtering, preferably a low-pass, noise reduction filter, to said new projections; computing the difference images between unfiltered and filtered new projections (e.g. equivalent to a high-pass filter); and/or
- rescaling the low-pass filtered new projections, to values matching the monochromatic attenuation (filtered with the same kernel) of the object along each ray /perspective; or
- rescaling the low-pass filtered new-projections by replacing them with the low-pass filtered HE projection of the at least two first projections and/or the at least two second projections, and re-combining (adding) the latter to the high-pass filtered new projections.

Another embodiment provides a method for a CT reconstruction of an object based on the at least four perspectives obtained by the above-described method. Here, the method may further comprise a step of computing a CT volume image based on the at least four perspective or additional perspectives/new calculated perspectives.

Embodiments of the present invention may be implemented by a computer. Therefore, embodiments provide a computer program for performing the above methods. Another embodiment provides an image reconstruction device for reconstruction of an object based on at least four radiographic projections of the object in at least two different perspectives, the image reconstruction device comprising a processor and an interface: wherein the interface is configured to obtain at least two first projections of the at least four projections from one first perspective which includes the ray attenuation belonging to a first path length through the object, wherein the at least two first projections of the at least four projections from the one first perspective being recorded using different energy spectra; and to obtain at least two second projections of the at least four projections from at least one second perspective which includes the ray attenuation belonging to a second path length through the object through the object, wherein the at least two second projections of the at least four projections from the one second perspective being recorded using different energy spectra; and wherein the processor is configured for ray-wise weighting and summing the at least two first projections and at least two second projections using a cost.

Another embodiment provides an X-ray CT apparatus comprising an X-ray irradiation unit that emits X-rays onto an irradiated object; an X-ray detection unit that detects the X-rays emitted from the X-ray irradiation unit and passed through the irradiated object. The CT apparatus further comprises an image reconstruction device as defined above. Embodiments of the present invention will subsequently be discussed referring to the enclosed figures, wherein

Fig. 1    shows two examples of cross sections commonly and countered in NDT inspections by a CT (note, in-plane and out-of-plane components are indicated by red and green marks respectively. Commonly, the spectrum is adjusted to the longest path length s1, thereby rendering the object almost transparent along the shortest path length s2);

Fig. 2    shows a schematic diagram illustrating the relation between SNR and logarithmic transmission A (note, the curve was obtained from two scans of a flat plate of glass-fiber-reinforced polymer (GFRP), one scan uses UA = 40 kV and no filters, the other uses UA = 180 kV and 2 mm aluminum and copper of the same thickness as attenuation filters);

Fig. 3    shows a schematic flow chart illustrating a basic embodiment of the method for improving CT reconstruction of objects with strongly varying X-ray path lengths;

Fig. 4 shows a schematic block diagram of the entity enabling to carry out the method as described in the context of Fig. 3;

Fig. 5a & 5b show schematic block diagrams illustrating an X-ray system for discussing applications of the embodiment.

Below, embodiments of the present invention will subsequently be discussed referring to the enclosed figures, wherein identical reference numerals are provided to objects having identical or similar functions, so that the description thereof is mutually applicable and interchangeable.

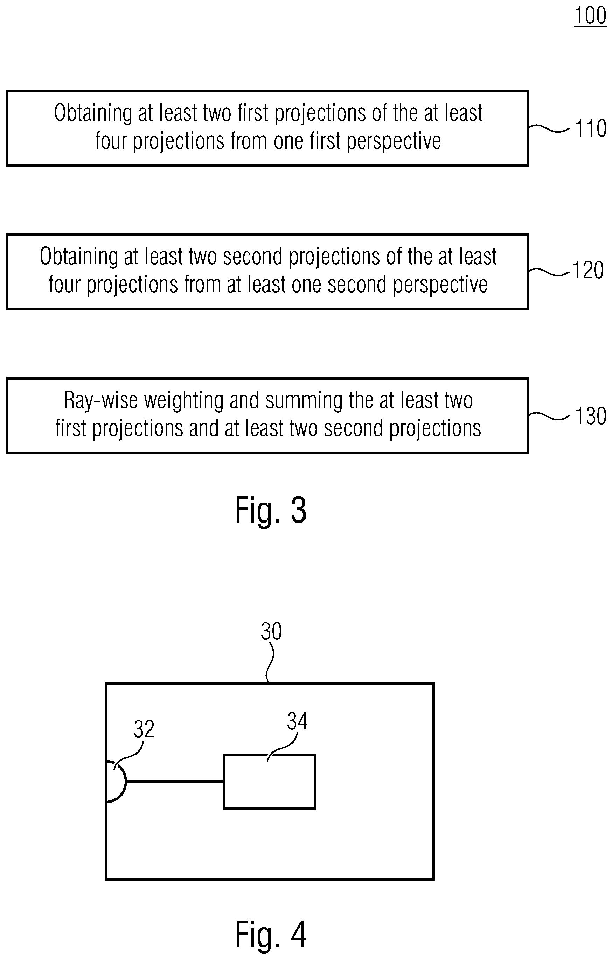

With respect to Fig. 3, embodiments of the inventive method will be discussed. Within Fig. 3, the basic implementation is shown. Before discussing embodiments of the present invention, the problem will be discussed in detail. Note, the analysis of the problem is part of the inventive concept, since the analysis forms the basis for the inventive step. For objects made from a single material, CT reconstruction assumes isotropy of the local X-ray attenuation $\mu(\vec{r} = [x, y, z])$ (or refraction in the case of phase-contrast scanners), hence CT as a method ignores the energy-dependence of $\mu$ and thereby assumes the reconstructed volume to show material contrast only. Violating this assumption implies beam-hardening effects, which appear as imaging artifacts from the volume reconstruction.

But $\mu$ is not the only observable which is reconstructed from the projection data $p_\theta(\eta, \xi)$ during CT ($\theta$: projection angle; $\eta, \xi$: detector pixel coordinates, assuming a two-dimensional pixel array). For a single material $\mu(\vec{r}) = \vec{\mu} \cdot \rho(\vec{r})$ is the product of its average attenuation and its spatial distribution $\rho(\vec{r}) = [0, 1]$. With non-destructive testing (NDT) it is frequently the latter, which is of interest. Beam-hardening artifacts can be avoided by tailoring the polychromatic X-ray spectrum but in consequence the signal which is mapping $\rho(\vec{r})$ is strongly weakened. Assuming an object (or its cross-section) which has proportions, that imply strong local and/or angular deviations of the projected path length, e.g. along two separate rays

$$\int_{s_1} \rho(\vec{r})d\vec{r} > 3 \cdot \int_{s_2} \rho(\vec{r})d\vec{r}$$

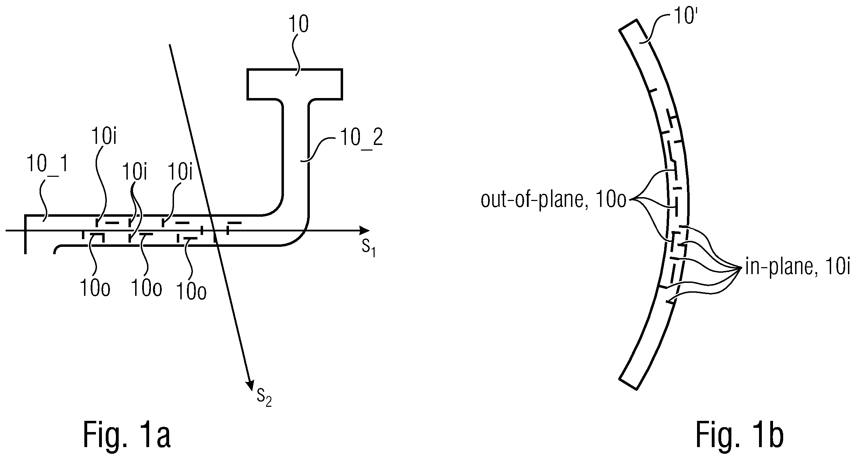

Fig. 1 illustrates common geometries for which this assumption is fulfilled.

Fig. 1 shows in the part A and object 10 to be X-rayed. The object 10 can have an angular shape and have two components 10_1 and 10_2 being arranged substantially perpendicular to each other. For the discussion of the problem, the focus is taken on part 10_1. Here in plane portions 10i and out of plane portions 10o are marked. The object 10 and especially the portion 10_1 of the object 10 is X-rayed along two paths marked by $s_1$ and $s_2$. The path lengths $s_1$ may be the longest, while the path lengths $s_2$ are the shortest due to the respective perspective through the object 10. For example, $s_1$ extends along 10_1, i.e., the longest portion of material of the object 10, while $s_2$ extends transverse to the portion 10_1.

Fig. 1b shows another object 10' also having high aspect ratio. Here, the in plane and out of plane components are marked as well by 10i and 10o. To avoid beam-hardening the X-ray spectrum is adjusted (by raising the anode voltage and/or by adding attenuation filters) to yield a reasonable transmission along the longest path length $s_1$, e.g. 20% guarantee reconstruction almost free from beam hardening. The obvious drawback of this strategy is that transmission along the shortest path $s_2$ is now much too high (commonly 80% - 90%). Because the signal-to-noise ratio (SNR) strongly depends on transmission, any in-plane structural information $\rho(\vec{r})$ (cf. Fig. 1) is lost or at least strongly weakened. Furthermore, hardening the spectrum for avoiding beam-hardening artifacts also renders the determination of $\overline{\mu}$ highly uncertain. The latter generally scales with the photon energy $E^{-3}$.

Consequently, the reconstructed volume shows a high SNR along $s_1$ while the latter remains low along $s_2$. The stronger the difference in path length, the more anisotropic the SNR of the reconstructed CT volume. Already at a ratio of 1:3 this problem can lead to partial or complete information loss along the shorter path length. A second low-energy scan, i.e. having 20% transmission along $s_2$ would include this information, but instead exhibit strong beam hardening artifacts and vice versa, lack structural information along $s_1$, where transmission could be < 1%.

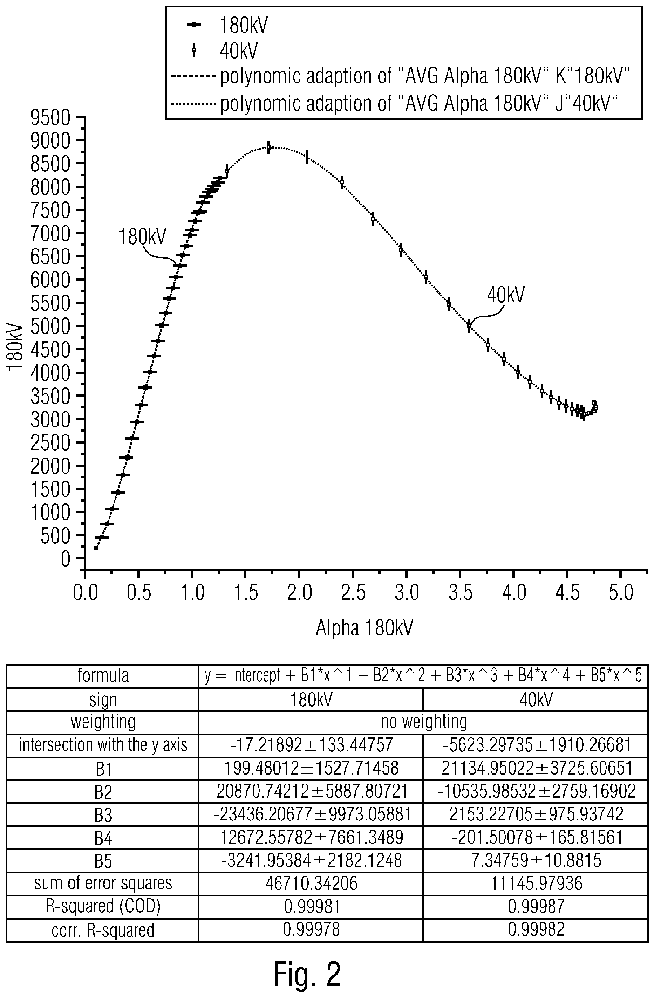

Because the relation between SNR and transmission T (or logarithmic transmission $\alpha = -\ln(T)$ is crucial for this invention, the latter is displayed in Fig 2. Fig. 2 shows a diagram where the 180 kb measurements and the 40kb measurements are marked. The SNR scale is arbitrarily chosen. Temporal SNR can be computed from time-series of 10 images showing a material of constant thickness/transmission and computing pixel-wise the time-average $\overline{\alpha}$ and standard deviation $\sigma_\alpha$ of the recorded values, then averaging the corresponding detector area. Different thicknesses can for example be realize by rotating a flat plate of a given material (e.g., GFRP).

$$SNR_{avg} = \langle SNR(\eta, \xi) \rangle = \langle \frac{\overline{\alpha}(\eta, \xi)}{\sigma_\alpha(\eta, \xi)} \rangle$$

For monochromatic radiation $SNR_{avg}$ can even be derived analytically. Obtained from polychromatic measurements it displays a maximum around 18% transmission, approaches zero for $\alpha \to 0$, hence 100% transmission and decreases steadily for transmissions lower than 18%.

In consequence, for objects with strongly varying X-ray path lengths one would prefer to combine the information of two or more scans, rather than use a single scan, into CT reconstruction in order to maintain a strong signal along the short and the long path lengths while avoiding beam hardening during reconstruction. This invention proposes to record two or more congruent scans (corresponding projections for every view). For the first scan transmission is adjusted to $s_1$ (longest path length, high energy HE), for the second to $s_2$ (shortest path length, low energy LE). Prior to CT reconstruction, a merged set of projection images is computed wherein every image is a linearly weighted combination of the two measurements.

$$p_\theta^{merge}(\eta, \xi) = \omega_\theta^{HE}(\eta, \xi)p_\theta^{HE}(\eta, \xi) + \omega_\theta^{LE}(\eta, \xi)p_\theta^{LE}(\eta, \xi)$$

Unlike other dual-energy processes, this approach uses local weights $\omega_\theta^{HE,LE}(\eta, \xi)$ which are computed for every ray in order to achieve the best, homogeneous SNR in the reconstructed volume. Extending this approach to more than two scans is self-explaining. Assuming a single material object and $p_\theta = \alpha$, hence a logarithmic transmission, the merged result further has to be proportional to the material thickness along each projected ray, for the reconstruction to be free of beam hardening artifacts.

For most NDT applications of the CT according to the prior art, the core problem is ignored, i.e. the high energy scan $p_\theta^{HE}(\eta, \xi)$ is supposed to be best possible result. If admissible the sample is cut down to the smallest possible size in order to keep the energy spectrum as soft as possible. In those cases where cutting is not an option, either exposure time or emission current are increased for compensating the lower SNR across the shorter path length. Medical CT routinely applies this scheme for optimizing SNR within a single CT scan with respect to effective patient dose. The latter scales with the emission current.

Reconstructing CT images of flat objects which are free from beam hardening artifacts and which display the in-plane structural information nevertheless, is commonly realized by computed laminography (CL) scans for which two variants exist: rotational and translational CL. Both have in common that they eclipse, at least strongly blur, all out-of-plane structure of $\rho(\vec{r})$. With respect to its performance, CL is to be seen as a special case of limited angle CT with the missing angles covering the long side of the object. Because it is restricting observations to a more or less constant object thickness, CL does not require multiple scans, i.e. two different energy spectra.

Dual-energy CT (DECT) as a method is routinely applied for medical as well as NDT applications. Yet, in both contexts DECT only aims at improving multi-material contrast and/or material decomposition, e.g. by combining the two scans with model based volume reconstruction schemes and a priori knowledge about the two X-ray spectra in order to either a. create virtually monochromatic scans thus re-enforcing the constancy of $\mu$; or b. render one out of two materials invisible (e.g. bone /soft tissue, kimberlite /diamond). DECT features global (not local) weights and it is not applied to single-material objects.

According to embodiments of the present invention, the method 100 can be applied. The method 100 comprises the three basic steps 110, 120 and 130.

During the step 110, at least two first projections from a first perspective $s_1$ (cf. Fig. 1) is obtained. The two projections/projection images include an X-ray attenuation record belonging to a first path length through the object 10. The first path lengths may be the longest (cf. path $s_1$). Two projections are taken since same differ with regard to its energy spectra. For example, the first of the two first projections is the low energy projection/record, while the second of the at least two first projections is the high energy projection (record HE).

During a second basic step 120, two second projections of the at least four projections from a second (different) perspective are obtained. This second projection/image include an X-ray attenuation which approximates the shortest path length through the object (cf. path $s_2$). As discussed above, the first of the two second projections/records may be a low energy record, while the second of the two second projections may be a high energy record.

Starting from the finding that the low energy record may be more appropriate for the second perspective $s_2$ (or certain areas seen from this perspective) while the high energy record may be more appropriate for the first perspective $s_1$, it would be beneficial to take this finding into account, when combing the projections taken from the different perspectives $s_1$ and $s_2$. This is done by the third step 130 in which a ray wise widening and summing of the at least two first projections and the at least two second projections is done. This weighting is performed by use of a function describing the weighting factor dependent on the perspective. For example, the weighting between the LE and the HE recording may be different for the first perspective $s_1$ and the second perspective $s_2$. This function may thus describe the balance between the HE recordings and the LE recordings along the different projection angles, when the CT system having a rotatable source and detector pair is used. In case a plurality of source and detector pairs for a plurality of angles should be used, e.g., two orthogonally arranged pairs or a plurality circularly arranged around the object for each pair, a respective balance is given. Note, when a surface detector or line detector extending along the circumference around the object is used for each pixel along the circumference, the perspective is different, so that for each pixel along the circumference, own weighting factors (one for LE and one for HE) is used. Expressed in other words, this means that a so-called cost function along the pixels of the detector is applicable. This means that per detector pixel pair or per ray, a cost function is available for describing the quality difference between HE and LE recordings. The same holds true in the perpendicular direction, i.e., along the height of the surface detector. By use of a cost function, a pixel wise weighting can be performed. Below, further details regarding this cost function will be given.

Enhanced embodiments are based on the finding that there exists a cost function $S(\alpha)$ which can be used for weighting the logarithmic transmissions, observed from each ray in the two scans. This cost function may scale with the signal-to-noise ratio (SNR, temporal or spatial) or with other image quality indices such as contrast-noise-ratio (CNR), local Shannon entropy or variance.

For the sake of simplicity we will omit the detector pixel coordinates $(\eta, \xi)$ and restrict the method to two scans in the following. During a first step we eliminate the uncertainty about the two recorded transmissions $\rho_\theta^{LE}$ and $\rho_\theta^{HE}$ by reducing noise in the two scans with a low-pass filter $h(\eta, \xi)$:

$$\overline{p_\theta^{LE}} = p_\theta^{LE} * h \ \text{ and } \ \overline{p_\theta^{HE}} = p_\theta^{HE} * h$$

Note that h may also extend into the angular direction $\theta$. Non-linear filters apply as well, e.g. a 5 x 5 x 5 median. If applied as a convolution and depending on the noise level, h could be a mean, Gaussian, Lorentz or a Wiener filter of variable size and shape. The weights $\omega_\theta^{LE}$ and $\omega_\theta^{HE}$ are then computed from the low-pass filtered transmissions and from the cost function $S(\alpha)$:

$$\omega_\theta^{LE} = \frac{S\left(\overline{p_\theta^{LE}}\right)}{S\left(\overline{p_\theta^{LE}}\right) + S\left(\overline{p_\theta^{HE}}\right)} \ \text{ and } \ \omega_\theta^{HE} = \frac{S\left(\overline{p_\theta^{HE}}\right)}{S\left(\overline{p_\theta^{LE}}\right) + S\left(\overline{p_\theta^{HE}}\right)}$$

Note, that this weighting only applies to those rays which were transmitted by the object. Except for the case of region-of-interest CT, the rays which were only propagating through air need to be masked out (e.g. by setting an upper threshold to transmission). For the latter constant weights (e.g., 50%:50% assuming both scans have similar detector counts for air) are appropriate.

For a single material we further need to solve the problem that the merged transmissions $p_\theta^{merge}$ (eq. 3) violate the $\mu$ = const assumption. Re-scaling $p_\theta^{merge}$ to values which are proportional to the local object thickness along the ray $\theta$ can be achieved in a number of ways.

1. One may compute the low pass $\overline{p_\theta^{merge}} = p_\theta^{merge} * h^*$ (note, h* maybe different from h) and re-scale

$$p_\theta^{merge,*} = p_\theta^{merge} \cdot \frac{\overline{p_\theta^{HE}}}{\overline{p_\theta^{merge}}},$$

assuming the HE scan to be free from beam hardening. Note that this solution is equivalent to adding only high-frequency information from the LE scan to the result.

2. Possessing a model of the object (e.g., in terms of a computer-aided design, CAD) and exact knowledge of the measurement coordinate system, one may compute the exact path lengths for each ray and re-scale $\overline{p_\theta^{merge}}$ accordingly.

3. The above-mentioned model may as well be generated from segmenting the HE scan into material and air.

The re-scaled, merged transmissions $p_\theta^{merge,*}$ are then processed by conventional CT volume reconstruction (either filtered back-projection/FBP or algebraic reconstruction /ART).

The method may also apply to multi-material samples, considering that the majority of the volume is one material and the others only constitute a minor volume fraction (e.g. metallic implants in bone).

The above embodiments can be implemented in software performing the respective method steps. Further embodiments can be implemented as apparatus, which is shown by Fig. 4.

Fig. 4 shows an image reconstruction device 30 having an interface 32 for receiving the plurality (at least 4) projections. Furthermore, the device 30 comprises a processor 34, which is configured for revised weighting and summing the at least two first projections and the at least two second projections using a function or cost function as discussed above.

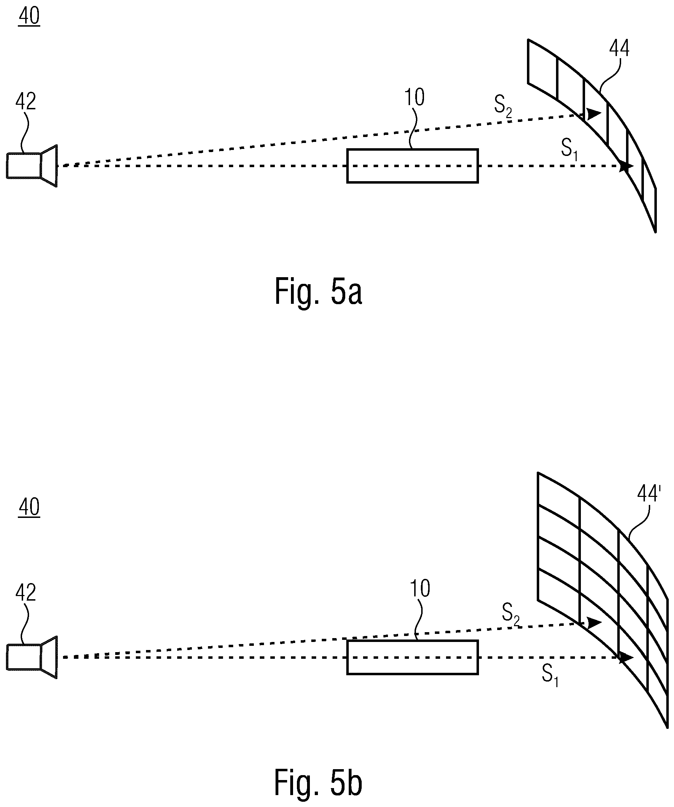

This apparatus 30 can be enhance to an X-ray system 14, which is illustrated by Fig. 5a. The X-ray system 40 comprises an X-ray source 42 and an X-ray detector 44, here a line array. The source detector pair 42 + 44 may be rotatable with respect to the object 10, which is arranged between 42 and 44. According to embodiments, relative rotation between the pair 42 and 44 and the object can be used to generate different perspectives. Here, either the object 10 can be rotated as marked by the arrow 10r, or the pair 42 + 44 can be rotated. Another option is that due to the line arrangement of the detector array 44 along the circumference around the object 10, different projections are possible to be determined, as illustrated by the two perspectives $s_1$ and $s_2$. Since it can happen, as illustrated, that the object 10 has a completely different path length when X-rayed, the weighting of the HE projection and the LE projection is performed pixel wise. Often the central pixels have a long projection length through the object 10, while pixels outside of the center have a short projection length. In such a case, the cost function used for weighting along the different projections $s_1$ and $s_2$ may have the shape of a Gaussian function or a reshape function. This Gaussian function is illustrated behind the detector 44 and marked by 11c.

With respect to Fig. 5b, an enhancement of the arrangement 40 of 5a is illustrated. Here, a surface detector 44' is used. In order to enable a pixel wise weighting, the cost function extends a two-dimensional direction as illustrated by 11'. As can be seen, here the cost function defines in a two-dimensional way, i.e., for the pixels arranged in a two-dimensional direction the weighting between HE projections and LE projections.

The scanner 40 comprising the elements 42 and 44 records two scans at different HE and LE energies spectrums simultaneously. These recordings are processed by the entity 30 receiving the images via the interface 32 and linearly combines the two signals as discussed in the context of Fig. 3. This has the purpose of bettering the reconstruction volume images SNR for non-cylindrical single- or multi-material object.

The method is particularly interesting for scanners with the capability to record both scans simultaneously, i.e. without investing any additional scan time. The latter can be realized by:

1. Scanners which comprise one or two detectors (indirect or photon-counting) that can acquire two images, corresponding to different energy spectra, in one shot. Photon-counting detectors realize this task by setting appropriate electronic thresholds for HE and LE bins in every pixel, whereas indirect detectors can use two scintillator screens, each coupled to its own pixel matrix, where the HE screen is generally set downstream of the LE screen, the latter acting as energy filter for the former. One could also combine two pixel matrices side-by-side each covering 180° of a full scan or use a check-board patterned filter for the purpose of acquiring two energy spectra at the same time.

2. Scanners which comprise two or more X-ray anodes and the same amount of pixel matrices. Each pair of anode and pixel-matrix is set apart by a sufficiently large angular distance on the measurement circle (or rotating gantry for medical CT). In the simplest case (two pairs) the two directions of projection would be 90° apart, the emission cones would be collimated for making sure each detector only acquires the radiation from its corresponding source. By setting up one anode for LE, the other for HE scanning and registering the measurement coordinates of the two setups, two corresponding datasets can be recorded in a single round (there is a number of medical scanners matching this working principle).

This means that applications for the above-discussed embodiments are:

• Glass (GFRP) and carbon (CFRP) fiber reinforced-polymer parts commonly feature a wall thickness of a few millimeters, whereas their sides extend over several ten centimeters. Most parts are produced for automobiles and aircrafts, comprising frames, anchors, housings, seats and other structural components. GFRP is also a core material for building ships and wind-turbine blades, whereas helicopter-blades are made from CFRP. Impact tests on these materials require the detection of in-plane and out-of-plane damage (cracks and delaminations, respectively) for assessing the structural reliability of these parts and without cutting the latter to sizes smaller than 10 cm. Our innovation will enable CT to measure both damage types with CT and with a much improved measurement quality compared to single-scan CT.

- Testing wheels (aluminum cast or carbon) and tires is a strongly increasing field of application for industrial CT. The geometry of wheel and tire imply strong variation in the X-ray path length, which in turn deteriorate the material contrast, i.e. the probability for detecting small cracks and holes in the cast wheel and /or distinguishing different elastomers in the tire. The latter also comprises a minority volume fraction of steel wires for which our method could potentially reduce imaging artifacts while increasing contrast and structural detail visibility.

- Electronic circuit boards (PCBs) are fabricated on GFRP and contain a number of heavy metals in thee electronic components, potentially leading the complications /artifacts during CT reconstruction. Current technology is further enabling the 3D printing of electronic circuits on structural polymer parts of arbitrary geometry thus rendering PCBs from flat to more complex shaped objects. Since the latter cannot be scanned by CL our innovation likely has the unique capability of enabling CT to inspect these new circuit boards.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver .

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1.  A computer-implemented method (100) of obtaining at least four radiographic projections of an object in at least two different perspectives ($s_1$ and $s_2$), the at least four projections are used in a computed tomography, CT, measurement, especially for reconstructing volumetric properties at ray intersections from said at least two perspectives ($s_1$ and $s_2$) of the object, the method (100) comprises the following steps:

    obtaining at least two first projections of the at least four projections from one first perspective which includes the ray attenuation belonging to a first path length through the object, wherein the at least two first projections of the at least four projections from the one first perspective being recorded using different energy spectra;
    obtaining at least two second projections of the at least four projections from at least one second perspective which includes the ray attenuation belonging to a second path length through the object through the object, especially within a given set of rays /perspectives ($s_1$ and $s_2$), wherein the at least two second projections of the at least four projections from the one second perspective being recorded using different energy spectra; **characterised by**
    ray-wise weighting (130) and summing the at least two first projections and at least two second projections using a cost function per ray.

2.  The method (100) according to the claim 1, further comprising obtaining additional projections from additional perspectives ($s_1$ and $s_2$), wherein the at least two additional projections of from one additional perspective being recorded using different energy spectra.

3.  The method (100) according to the claim 1 or 2, further comprising:
    computing new projections by the ray-wise weighting (130) and summing the at least two first projections and at least two second projections and/or by ray-wise weighting (130) and summing of filtered and/or masked versions of the at least two first projections and at least two second projections.

4.  **The method** (100) according to any of previous claims, wherein the first and the second path length within the set of perspectives ($s_1$ and $s_2$), differ significantly from one another.

5.  The method (100) according to any of previous claims, wherein the different perspectives ($s_1$ and $s_2$) are realized by a simple axial rotation; or
    wherein the different perspectives ($s_1$ and $s_2$) result from a specific static arrangement of multiple sources and detector units around the object or wherein the different perspectives ($s_1$ and $s_2$) result from non-circular motion, either of the object or of the measurement device.

6.  The method (100) according to any of previous claims, wherein the cost function (11, 11') includes image quality metrics, which depend on the ray's transmission; and/or
    wherein the cost function (11, 11') defines the weighting (130) of the at least two first projections with respect to each other and the at least two second projections with respect to each other.

7.  The method (100) according to claim 6, wherein the image quality metric is one of the following: a temporal signal-to-noise ratio, SNR function, a spatial signal-to-noise ratio function, a contrast-to-noise ratio, CNR function, an inverse cost function (11, 11'), e.g. a variance function, or an entropy function, especially a local Shannon entropy metric.

8.  The method (100) according any of previous claims, wherein the cost function (11, 11') is directly computed from transmission images of the at least two first projections and/or of the at least two second projections.

9.  The method (100) according any of previous claims, wherein the cost function (11, 11') is obtained from a dedicated set of transmission images, which are either obtained by step-wise increasing acceleration voltages of the X-ray anode and /or by inserting attenuation filters of increasing thickness between anode and object.

10. The method (100) according any of previous claims, wherein the at least two first projections and/or the at least two second projections are obtained by using a double-layered line- or area detector, wherein the first layer records a LE projection, and - optionally with a metallic back-plate - acts as attenuation filter for the second layer recording a HE projection.

11. The method (100) according to any of the previous claims, wherein the at least two first projections and/or the at least two second projections are obtained by using at least two X-ray sources and an equivalent number of adjacent detectors.

12. The method (100) according to any of the previous claims, wherein the at least two first projections and/or the at least two second projections are obtained by employing electronic energy thresholds set in the pixels of photon counting detectors, also known as directly converting detectors.

13. The method (100) according to any of previous claims, wherein the cost function (11, 11') is a set of user-defined values; or
wherein the cost function (11, 11') is defined by at least one analytic mathematical function, e.g. a polynomial, a Gaussian, a Lorentzian, a step-wise linear shape, preferably a linearly decreasing shape or V-shape, a step or top-hat function, or a cosine.

14. The method (100) according to any of previous claims, wherein the weight for each ray of the at least two first projections and/or the at least two second projections is normalized with respect to the sum of cost function (11, 11') values for a set of congruent rays from the LE and the HE portions.

15. The method (100) according to any of previous claims, wherein the weights are given by the formula:

$$\omega_{\theta,i}^{LE} = \frac{s\left(\overline{p_{\theta,i}^{LE}}\right)}{s\left(\overline{p_{\theta,i}^{LE}}\right) + s\left(\overline{p_{\theta,i}^{HE}}\right)}, \text{ and } \omega_{\theta,i}^{HE} = \frac{s\left(\overline{p_{\theta,i}^{HE}}\right)}{s\left(\overline{p_{\theta,i}^{LE}}\right) + s\left(\overline{p_{\theta,i}^{HE}}\right)};$$

$s(x)$ - is the cost function (11, 11') value for the ray $x$; $\overline{x}$ indicates that the transmission at x is obtained after averaging its nearest neighbors for reducing noise; averaging can be realized by liner filtering or by applying a non-linear median filter;
where $\omega$ - the weight applying to each pixel /ray;

where $\overline{p_{\theta,i}^{y}}$ - a low-pass filtered respective portion y $\in$ {$LE, HE$} of a respective projection; $\theta$ representing the perspective, e.g. the rotation angle for circular CT geometry; i marks the pixel index s.

16. The method (100) according to any of previous claims, further comprising:
application of a linear or a non-linear filtering, preferably a low-pass, noise reduction filter, to the at least two first projections and/or the at least two second projections prior to or after performing the step of weighting (130).

17. The method (100) according to claim 16, wherein the noise reduction filtering is one of the following: a pixel wise filter along the direction of the sequence of perspectives ($s_1$ and $s_2$), a non-linear median filter, a mean filter, a Gaussian filter, a Lorentz filter, a Wiener filter.

18. The method (100) according to claim 16 or 17, further comprising:

obtaining new projections by summing the unfiltered weighted portions; applying a linear or a non-linear filtering, preferably a low-pass, noise reduction filter, to said new projections; computing the difference images between unfiltered and filtered new projections; and/or
rescaling the low-pass filtered new projections, to values matching the monochromatic attenuation, especially filtered with the same kernel of the object along each ray or perspective; or
rescaling the low-pass filtered new-projections by replacing them with the low-pass filtered HE projection of the at least two first projections and/or the at least two second projections, and re-combining or adding the latter to the high-pass filtered new projections.

19. A method (100) for a CT reconstruction of an object based on at least four perspectives ($s_1$ and $s_2$) obtained by the method in accordance with any of claims 1-18, comprising the step of computing a CT volume image based on the at least four perspectives ($s_1$ and $s_2$) or based on the on at least four perspectives ($s_1$ and $s_2$) and new projections as calculated according to claim 3.

20. A computer program comprising instructions, which, when the program runs on a computer, has the latter carry out the method in accordance with any of previous claims.

21. An image reconstruction device (30) for reconstruction of an object based on at least four radiographic projections of the object in at least two different perspectives ($s_1$ and $s_2$), the image reconstruction device (30) comprising a processor (34) and an interface (32):

wherein the interface is configured to obtain at least two first projections of the at least four projections from one first perspective which includes the ray attenuation belonging to a first path length through the object, wherein the at least two first projections of the at least four projections from the one first perspective being recorded using different energy spectra; and to obtain at least two second projections of the at least four projections from at least one second perspective which includes the ray attenuation belonging to a second path length through the object through the object, wherein the at least two second projections of the at least four projections from the one second perspective being recorded using different energy spectra; and

**characterised in that** the processor (34) is configured for ray-wise weighting (130) and summing the at least two first projections and at least two second projections using a cost per ray.

22. An X-ray CT apparatus (40), comprising:

an X-ray irradiation unit (42) that emits X-rays onto an irradiated object;
an X-ray detection unit (44) that detects the X-rays emitted from the X-ray irradiation unit (42) and passed through the irradiated object; and
an image reconstruction device (30) in accordance with claim 21.

**Patentansprüche**

1. Ein Computer-implementiertes Verfahren (100) zum Erhalten von zumindest vier Röntgenprojektionen eines Objekts in zumindest zwei verschiedenen Perspektiven ($s_1$ und $s_2$), wobei die zumindest vier Projektionen in einer Computertomografie-,CT-,Messung verwendet werden, insbesondere zum Rekonstruieren volumetrischer Eigenschaften an Strahlenschnittpunkten aus den mindestens zwei Perspektiven ($s_1$ und $s_2$) des Objekts, wobei das Verfahren (100) die folgenden Schritte aufweist:

Erhalten von zumindest zwei ersten Projektionen der zumindest vier Projektionen aus einer ersten Perspektive, die die Strahlendämpfung umfasst, welche zu einer ersten Pfadlänge durch das Objekt gehört, wobei die zumindest zwei ersten Projektionen der zumindest vier Projektionen aus der einen ersten Perspektive unter Verwendung verschiedener Energiespektren aufgezeichnet werden;
Erhalten von zumindest zwei zweiten Projektionen der zumindest vier Projektionen aus zumindest einer zweiten Perspektive, die die Strahlendämpfung umfasst, welche zu einer zweiten Pfadlänge durch das Objekt gehört, insbesondere innerhalb einer gegebenen Menge von Strahlen/Perspektiven ($s_1$ und $s_2$), wobei die zumindest zwei zweiten Projektionen der zumindest vier Projektionen aus der einen zweiten Perspektive unter Verwendung verschiedener Energiespektren aufgezeichnet werden; **gekennzeichnet durch**
strahlweises Gewichten (130) und Summieren der zumindest zwei ersten Projektionen und der zumindest zwei zweiten Projektionen unter Verwendung einer Kostenfunktion pro Strahl.

2. Das Verfahren (100) gemäß Anspruch 1, das ferner ein Erhalten zusätzlicher Projektionen aus zusätzlichen Perspektiven ($s_1$ und $s_2$) aufweist, wobei die zumindest zwei zusätzlichen Projektionen aus einer zusätzlichen Perspektive unter Verwendung verschiedener Energiespektren aufgezeichnet werden.

3. Das Verfahren (100) gemäß Anspruch 1 oder 2, das ferner folgende Schritte aufweist:
Berechnen neuer Projektionen durch das strahlweise Gewichten (130) und Summieren der zumindest zwei ersten Projektionen und der zumindest zwei zweiten Projektionen und/oder durch das strahlweise Gewichten (130) und Summieren gefilterter und/oder maskierter Versionen der zumindest zwei ersten Projektionen und der zumindest zwei zweiten Projektionen.

4. Das Verfahren (100) gemäß einem der vorhergehenden Ansprüche, wobei sich die erste und die zweite Pfadlänge innerhalb der Menge von Perspektiven ($s_1$ und $s_2$) signifikant voneinander unterscheiden.

5. Das Verfahren (100) gemäß einem der vorhergehenden Ansprüche, wobei die unterschiedlichen Perspektiven ($s_1$ und $s_2$) durch eine einfache axiale Drehung realisiert werden; oder
wobei die unterschiedlichen Perspektiven ($s_1$ und $s_2$) aus einer spezifischen statischen Anordnung von mehreren Quellen und Detektoreinheiten um das Objekt herum resultieren oder wobei die unterschiedlichen Perspektiven ($s_1$ und $s_2$) aus einer nicht-kreisförmigen Bewegung entweder des Objekts oder der Messvorrichtung resultieren.

6. Das Verfahren (100) gemäß einem der vorhergehenden Ansprüche, wobei die Kostenfunktion (11, 11') Bildqualitätsmetriken umfasst, die von der Übertragung des Strahls abhängen; und/oder wobei die Kostenfunktion (11, 11') das Gewichten (130) der zumindest zwei ersten Projektionen in Bezug zueinander und der zumindest zwei zweiten Projektionen in Bezug zueinander definiert.

7. Das Verfahren (100) gemäß Anspruch 6, wobei die Bildqualitätsmetrik eine der folgenden ist: eine zeitliche Signal-Rausch-Verhältnis-, SNR,-Funktion, eine räumliche Signal-Rausch-Verhältnis-Funktion, eine Kontrast-Rausch-Verhältnis-, CNR,-Funktion, eine inverse Kostenfunktion (11, 11'), z.B. eine Varianzfunktion, oder eine Entropiefunktion, insbesondere eine lokale Shannon-Entropiemetrik.

8. Das Verfahren (100) gemäß einem der vorhergehenden Ansprüche, wobei die Kostenfunktion (11, 11') direkt aus Übertragungsbildern der zumindest zwei ersten Projektionen und/oder der zumindest zwei zweiten Projektionen berechnet wird.

9. Das Verfahren (100) gemäß einem der vorhergehenden Ansprüche, wobei die Kostenfunktion (11, 11') aus einer dedizierten Menge von Übertragungsbildern erhalten wird, die entweder durch schrittweises Erhöhen von Beschleunigungsspannungen der Röntgenanode und/oder durch Einfügen von Dämpfungsfiltern mit zunehmender Dicke zwischen Anode und Objekt erhalten werden.

10. Das Verfahren (100) gemäß einem der vorhergehenden Ansprüche, wobei die zumindest zwei ersten Projektionen und/oder die zumindest zwei zweiten Projektionen unter Verwendung eines doppelschichtigen Linien- oder Flächendetektors erhalten werden, wobei die erste Schicht eine LE-Projektion aufzeichnet und - optional mit einer metallischen Rückplatte - als Dämpfungsfilter für die zweite Schicht wirkt, die eine HE-Projektion aufzeichnet.

11. Das Verfahren (100) gemäß einem der vorhergehenden Ansprüche, wobei die zumindest zwei ersten Projektionen und/oder die zumindest zwei zweiten Projektionen unter Verwendung von zumindest zwei Röntgenquellen und einer äquivalenten Anzahl von benachbarten Detektoren erhalten werden.

12. Das Verfahren (100) gemäß einem der vorhergehenden Ansprüche, wobei die zumindest zwei ersten Projektionen und/oder die zumindest zwei zweiten Projektionen unter Verwendung elektronischer Energieschwellenwerte erhalten werden, die in den Pixeln von Photonenzähldetektoren, auch als direkt konvertierende Detektoren bekannt, eingestellt sind.

13. Das Verfahren (100) gemäß einem der vorhergehenden Ansprüche, wobei die Kostenfunktion (11, 11') eine Menge von benutzerdefinierten Werten ist; oder wobei die Kostenfunktion (11, 11') durch zumindest eine analytische mathematische Funktion definiert ist, z.B. ein Polynom, eine Gaußsche, eine Lorentzsche, eine schrittweise lineare Form, vorzugsweise eine linear abnehmende Form oder V-Form, eine Stufen- oder Top-Hat-Funktion oder ein Cosinus.

14. Das Verfahren (100) gemäß einem der vorhergehenden Ansprüche, wobei die Gewichtung für jeden Strahl der zumindest zwei ersten Projektionen und/oder der zumindest zwei zweiten Projektionen in Bezug auf die Summe der Werte der Kostenfunktion (11, 11') für eine Menge von kongruenten Strahlen aus dem LE- und dem HE-Abschnitt normalisiert wird.

15. Das Verfahren (100) gemäß einem der vorhergehenden Ansprüche, wobei die Gewichtungen durch die folgende Formel gegeben sind:

$$\omega_{\theta,i}^{LE} = \frac{s\left(\overline{p_{\theta,i}^{LE}}\right)}{s\left(p_{\theta,i}^{LE}\right) + s\left(p_{\theta,i}^{HE}\right)} \text{ und } \omega_{\theta,i}^{HE} = \frac{s\left(\overline{p_{\theta,i}^{HE}}\right)}{s\left(p_{\theta,i}^{LE}\right) + s\left(p_{\theta,i}^{HE}\right)};$$

wobei $s(x)$ - der Wert der Kostenfunktion (11, 11') für den Strahl $x$ ist; $\overline{x}$ anzeigt, dass die Übertragung bei x nach der Mittelung seiner nächsten Nachbarn zur Rauschreduzierung erhalten wird; die Mittelung kann durch Linienfilterung oder durch Anwendung eines nichtlinearen Medianfilters realisiert werden;

wobei ω - die Gewichtung ist, die auf jedes Pixel/Strahl angewendet wird;

wobei $\overline{p_{\theta,i}^{y}}$ - ein tiefpassgefilterter jeweiliger Abschnitt y ∈ {*LE, HE*} einer jeweiligen Projektion ist; $\theta$ die Perspektive darstellt, z.B. der Drehwinkel für die kreisförmige CT-Geometrie; i den Pixelindex s markiert.

16. Das Verfahren (100) gemäß einem der vorhergehenden Ansprüche, das ferner folgende Schritte aufweist: Anwenden einer linearen oder einer nichtlinearen Filterung, vorzugsweise eines Tiefpass-Rauschreduzierungsfilters, auf die zumindest zwei ersten Projektionen und/oder die zumindest zwei zweiten Projektionen vor oder nach dem Durchführen des Schritts des Gewichtens (130).

17. Das Verfahren (100) gemäß Anspruch 16, wobei die Rauschreduzierungsfilterung eine der folgenden ist: ein pixelweises Filter entlang der Richtung der Sequenz von Perspektiven ($s_1$ und $s_2$), ein nichtlinearers Medianfilter, ein Mittelwertfilter, ein Gaußsches Filter, ein Lorentz-Filter, ein Wiener-Filter.

18. Das Verfahren (100) gemäß Anspruch 16 oder 17, das ferner folgende Schritte aufweist:

    Erhalten neuer Projektionen durch Summieren der ungefilterten gewichteten Abschnitte; Anwenden einer linearen oder einer nichtlinearen Filterung, vorzugsweise eines Tiefpass-Rauschreduzierungsfilters, auf die neuen Projektionen; Berechnen der Differenzbilder zwischen ungefilterten und gefilterten neuen Projektionen; und/oder
    Neuskalieren der tiefpassgefilterten neuen Projektionen auf Werte, die mit der monochromatischen Dämpfung übereinstimmen, insbesondere gefiltert mit demselben Kern des Objekts entlang jedes Strahls oder jeder Perspektive; oder
    Neuskalieren der tiefpassgefilterten neuen Projektionen durch Ersetzen derselben mit der tiefpassgefilterten HE-Projektion der zumindest zwei ersten Projektionen und/oder der zumindest zwei zweiten Projektionen und erneutes Kombinieren oder Hinzufügen derselben zu den hochpassgefilterten neuen Projektionen.

19. Ein Verfahren (100) für eine CT-Rekonstruktion eines Objekts basierend auf zumindest vier Perspektiven ($s_1$ und $s_2$), die durch das Verfahren gemäß einem der Ansprüche 1-18 erhalten werden, das den Schritt des Berechnens eines CT-Volumenbildes basierend auf den zumindest vier Perspektiven ($s_1$ und $s_2$) oder basierend auf den zumindest vier Perspektiven ($s_1$ und $s_2$) und neuen Projektionen, wie gemäß Anspruch 3 berechnet, aufweist.

20. Ein Computerprogramm, das Anweisungen aufweist, die, wenn das Programm auf einem Computer läuft, den Letzteren veranlassen, das Verfahren gemäß einem der vorhergehenden Ansprüche auszuführen.

21. Eine Bildrekonstruktionsvorrichtung (30) zur Rekonstruktion eines Objekts basierend auf zumindest vier Röntgenprojektionen des Objekts in zumindest zwei verschiedenen Perspektiven ($s_1$ und $s_2$), wobei die Bildrekonstruktions-vorrichtung (30) einen Prozessor (34) und eine Schnittstelle (32) aufweist:

    wobei die Schnittstelle dazu konfiguriert ist, zumindest zwei erste Projektionen der zumindest vier Projektionen aus einer ersten Perspektive zu erhalten, die die Strahlendämpfung umfasst, welche zu einer ersten Pfadlänge durch das Objekt gehört, wobei die zumindest zwei ersten Projektionen der zumindest vier Projektionen aus der einen ersten Perspektive unter Verwendung verschiedener Energiespektren aufgezeichnet werden; und zumindest zwei zweite Projektionen der zumindest vier Projektionen aus zumindest einer zweiten Perspektive zu erhalten, die die Strahlendämpfung umfasst, welche zu einer zweiten Pfadlänge durch das Objekt gehört, wobei die zumindest zwei zweiten Projektionen der zumindest vier Projektionen aus der einen zweiten Perspektive unter Verwendung verschiedener Energiespektren aufgezeichnet werden; und
    **dadurch gekennzeichnet, dass** der Prozessor (34) zum strahlweisen Gewichten (130) und Summieren der zumindest zwei ersten Projektionen und der zumindest zwei zweiten Projektionen unter Verwendung einer Kosten pro Strahl konfiguriert ist.

22. Eine Röntgen-CT-Vorrichtung (40), die folgende Merkmale aufweist:

    eine Röntgenbestrahlungseinheit (42), die Röntgenstrahlen auf ein bestrahltes Objekt emittiert;
    eine Röntgendetektionseinheit (44), die die Röntgenstrahlen detektiert, die von der Röntgenbestrahlungseinheit (42) emittiert werden und durch das bestrahlte Objekt hindurchgetreten sind; und
    eine Bildrekonstruktionsvorrichtung (30) gemäß Anspruch 21.

**Revendications**

1. Procédé mis en œuvre par ordinateur (100) pour obtenir au moins quatre projections radiographiques d'un objet dans au moins deux perspectives différentes ($s_1$ et $s_2$), les au moins quatre projections sont utilisées dans une mesure par tomographie assistée par ordinateur, CT, en particulier pour reconstruire les propriétés volumétriques aux intersections des rayons à partir desdites au moins deux perspectives ($s_1$ et $s_2$) de l'objet, le procédé (100) comprend les étapes suivantes :

   obtenir au moins deux premières projections des au moins quatre projections à partir d'une première perspective qui inclut l'atténuation du rayon appartenant à une première longueur de trajet à travers l'objet, dans lequel les au moins deux premières projections des au moins quatre projections à partir de la première perspective étant enregistrées à l'aide de différents spectres d'énergie ;
   obtenir au moins deux deuxièmes projections des au moins quatre projections à partir d'au moins une deuxième perspective qui inclut l'atténuation du rayon appartenant à une deuxième longueur de trajet à travers l'objet, en particulier dans un ensemble donné de rayons/perspectives ($s_1$ et $s_2$), dans lequel les au moins deux deuxièmes projections des au moins quatre projections à partir de la deuxième perspective étant enregistrées à l'aide de différents spectres d'énergie ;
   **caractérisé par** une pondération par rayon (130) et une addition des au moins deux premières projections et des au moins deux deuxièmes projections à l'aide d'une fonction de coût par rayon.

2. Procédé (100) selon la revendication 1, comprenant en outre l'obtention de projections supplémentaires à partir de perspectives supplémentaires ($s_1$ et $s_2$), dans lequel les au moins deux projections supplémentaires provenant d'une perspective supplémentaire étant enregistrées à l'aide de spectres d'énergie différents.

3. Procédé (100) selon la revendication 1 ou 2, comprenant en outre :
   le calcul de nouvelles projections par pondération par rayon (130) et addition des au moins deux premières projections et des au moins deux deuxièmes projections et/ou par pondération par rayon (130) et addition des versions filtrées et/ou masquées des au moins deux premières projections et des au moins deux deuxièmes projections.

4. Procédé (100) selon l'une quelconque des revendications précédentes, dans lequel la première et la deuxième longueurs de trajet dans l'ensemble de perspectives ($s_1$ et $s_2$) diffèrent considérablement l'une de l'autre.

5. Procédé (100) selon l'une quelconque des revendications précédentes, dans lequel les différentes perspectives ($s_1$ et $s_2$) sont réalisées par une simple rotation axiale ; ou
   dans lequel les différentes perspectives ($s_1$ et $s_2$) résultent d'une disposition statique spécifique de plusieurs sources et unités de détection autour de l'objet ou dans lequel les différentes perspectives ($s_1$ et $s_2$) résultent d'un mouvement non circulaire, soit de l'objet, soit du dispositif de mesure.

6. Procédé (100) selon l'une quelconque des revendications précédentes, dans lequel la fonction de coût (11, 11') comprend des mesures de qualité d'image qui dépendent de la transmission du rayon ; et/ou
   dans lequel la fonction de coût (11, 11') définit la pondération (130) des au moins deux premières projections les unes par rapport aux autres et des au moins deux deuxièmes projections les unes par rapport aux autres.

7. Procédé (100) selon la revendication 6, dans lequel la métrique de qualité d'image est l'une des suivantes : un rapport signal/bruit temporel, une fonction SNR, une fonction de rapport signal/bruit spatial, un rapport contraste/bruit, une fonction CNR, une fonction de coût inverse (11, 11'), par exemple une fonction de variance, ou une fonction d'entropie, en particulier une métrique d'entropie locale de Shannon.

8. Procédé (100) selon l'une quelconque des revendications précédentes, dans lequel la fonction de coût (11, 11') est calculée directement à partir des images de transmission des au moins deux premières projections et/ou des au moins deux deuxièmes projections.

9. Procédé (100) selon l'une quelconque des revendications précédentes, dans lequel la fonction de coût (11, 11') est obtenue à partir d'un ensemble dédié d'images de transmission, qui sont obtenues soit en augmentant progressivement les tensions d'accélération de l'anode à rayons X et/ou en insérant des filtres d'atténuation d'épaisseur croissante entre l'anode et l'objet.

10. Procédé (100) selon l'une quelconque des revendications précédentes, dans lequel les au moins deux premières projections et/ou les au moins deux deuxièmes projections sont obtenues à l'aide d'un détecteur linéaire ou matriciel à double couche, dans lequel la première couche enregistre une projection LE et, éventuellement avec une plaque arrière métallique, agit comme un filtre d'atténuation pour la deuxième couche enregistrant une projection HE.

11. Procédé (100) selon l'une quelconque des revendications précédentes, dans lequel les au moins deux premières projections et/ou les au moins deux deuxièmes projections sont obtenues en utilisant au moins deux sources de rayons X et un nombre équivalent de détecteurs adjacents.

12. Procédé (100) selon l'une quelconque des revendications précédentes, dans lequel les au moins deux premières projections et/ou les au moins deux deuxièmes projections sont obtenues en utilisant des seuils d'énergie électroniques définis dans les pixels de détecteurs à comptage de photons, également appelés détecteurs à conversion directe.

13. Procédé (100) selon l'une quelconque des revendications précédentes, dans lequel la fonction de coût (11, 11') est un ensemble de valeurs définies par l'utilisateur ; ou
dans lequel la fonction de coût (11, 11') est définie par au moins une fonction mathématique analytique, par exemple une fonction polynomiale, gaussienne, lorentzienne, une forme linéaire par paliers, de préférence une forme décroissant linéairement ou en V, une fonction en escalier ou en chapeau haut-de-forme, ou une fonction cosinus.

14. Procédé (100) selon l'une quelconque des revendications précédentes, dans lequel le poids pour chaque rayon des au moins deux premières projections et/ou des au moins deux deuxièmes projections est normalisé par rapport à la somme des valeurs de la fonction de coût (11, 11') pour un ensemble de rayons congruents provenant des parties LE et HE.

15. Procédé (100) selon l'une quelconque des revendications précédentes, dans lequel les poids sont donnés par la formule :

$$\omega_{\theta,i}^{LE} = \frac{s\left(\overline{p_{\theta,i}^{LE}}\right)}{s\left(p_{\theta,i}^{LE}\right) + s\left(p_{\theta,i}^{HE}\right)}, \text{ et } \omega_{\theta,i}^{HE} = \frac{s\left(\overline{p_{\theta,i}^{HE}}\right)}{s\left(p_{\theta,i}^{LE}\right) + s\left(p_{\theta,i}^{HE}\right)};$$

$s(x)$ - est la valeur de la fonction de coût (11, 11') pour le rayon $x$ ; $\overline{x}$ indique que la transmission à $x$ est obtenue après avoir calculé la moyenne de ses voisins les plus proches afin de réduire le bruit ; le calcul de la moyenne peut être réalisé par un filtrage linéaire ou en appliquant un filtre médian non linéaire ;
où $\omega$ - le poids appliqué à chaque pixel/rayon ;

où $\overline{p_{\theta,i}^{y}}$ - une partie respective filtrée par un filtre passe-bas $y \in \{LE, HE\}$ d'une projection respective ; $\theta$ représentant la perspective, par exemple l'angle de rotation pour une géométrie CT circulaire ; $i$ marque l'indice de pixel s.

16. Procédé (100) selon l'une quelconque des revendications précédentes, comprenant en outre :
application d'un filtrage linéaire ou non linéaire, de préférence un filtre de réduction du bruit passe-bas, aux au moins deux premières projections et/ou aux au moins deux deuxièmes projections avant ou après l'exécution de l'étape de pondération (130).

17. Procédé (100) selon la revendication 16, dans lequel le filtrage de réduction du bruit est l'un des suivants : un filtre pixel par pixel le long de la direction de la séquence de perspectives ($s_1$ et $s_2$), un filtre médian non linéaire, un filtre moyen, un filtre gaussien, un filtre de Lorentz, un filtre de Wiener.

18. Procédé (100) selon la revendication 16 ou 17, comprenant en outre :

l'obtention de nouvelles projections en additionnant les parties pondérées non filtrées ; l'application d'un filtrage linéaire ou non linéaire, de préférence un filtre passe-bas de réduction du bruit, auxdites nouvelles projections ; le calcul des images différentielles entre les nouvelles projections non filtrées et filtrées ; et/ou
la remise à l'échelle des nouvelles projections filtrées par passe-bas, à des valeurs correspondant à l'atténuation monochromatique, en particulier filtrées avec le même noyau de l'objet le long de chaque rayon ou perspective ; ou

la remise à l'échelle des nouvelles projections filtrées par passe-bas en les remplaçant par la projection HE filtrée par passe-bas des au moins deux premières projections et/ou des moins deux deuxièmes projections, et recombiner ou ajouter ces dernières aux nouvelles projections filtrées par passe-haut.

**19.** Procédé (100) pour la reconstruction par CT d'un objet sur la base d'au moins quatre perspectives ($s_1$ et $s_2$) obtenues par le procédé selon l'une quelconque des revendications 1 à 18, comprenant l'étape consistant à calculer une image volumique CT sur la base des au moins quatre perspectives ($s_1$ et $s_2$) ou sur la base des au moins quatre perspectives ($s_1$ et $s_2$) et de nouvelles projections calculées conformément à la revendication 3.

**20.** Programme informatique comprenant des instructions qui, lorsque le programme est exécuté sur un ordinateur, font que ce dernier exécute le procédé selon l'une quelconque des revendications précédentes.

**21.** Dispositif de reconstruction d'image (30) pour la reconstruction d'un objet sur la base d'au moins quatre projections radiographiques de l'objet dans au moins deux perspectives différentes ($s_1$ et $s_2$), le dispositif de reconstruction d'image (30) comprenant un processeur (34) et une interface (32) :

dans lequel l'interface est configurée pour obtenir au moins deux premières projections parmi les au moins quatre projections à partir d'une première perspective qui comprend l'atténuation des rayons appartenant à une première longueur de trajet à travers l'objet, dans lequel les au moins deux premières projections parmi les au moins quatre projections à partir de la première perspective sont enregistrées à l'aide de différents spectres d'énergie ; et pour obtenir au moins deux deuxièmes projections des au moins quatre projections à partir d'au moins une deuxième perspective qui inclut l'atténuation des rayons appartenant à une deuxième longueur de trajet à travers l'objet, dans lequel les au moins deux deuxièmes projections des au moins quatre projections à partir de la deuxième perspective étant enregistrées à l'aide de différents spectres d'énergie ; et **caractérisé en ce que** le processeur (34) est configuré pour pondérer (130) et additionner par rayon les au moins deux premières projections et les au moins deux deuxièmes projections en fonction d'un coût par rayon.

**22.** Appareil de CT à rayons X (40), comprenant :

une unité d'irradiation aux rayons X (42) qui émet des rayons X sur un objet irradié ;
une unité de détection des rayons X (44) qui détecte les rayons X émis par l'unité d'irradiation aux rayons X (42) et ayant traversé l'objet irradié ; et
un dispositif de reconstruction d'image (30) selon la revendication 21.

Fig. 1a

Fig. 1b

EP 4 016 461 B1

| formula | y = intercept + B1*x^1 + B2*x^2 + B3*x^3 + B4*x^4 + B5*x^5 | |
|---|---|---|
| sign | 180kV | 40kV |
| weighting | no weighting | |
| intersection with the y axis | -17.21892±133.44757 | -5623.29735±1910.26681 |
| B1 | 199.48012±1527.71458 | 21134.95022±3725.60651 |
| B2 | 20870.74212±5887.80721 | -10535.98532±2759.16902 |
| B3 | -23436.20677±9973.05881 | 2153.22705±975.93742 |
| B4 | 12672.55782±7661.3489 | -201.50078±165.81561 |
| B5 | -3241.95384±2182.1248 | 7.34759±10.8815 |
| sum of error squares | 46710.34206 | 11145.97936 |
| R-squared (COD) | 0.99981 | 0.99987 |
| corr. R-squared | 0.99978 | 0.99982 |

Fig. 2

100

Obtaining at least two first projections of the at least four projections from one first perspective ~110

Obtaining at least two second projections of the at least four projections from at least one second perspective ~120

Ray-wise weighting and summing the at least two first projections and at least two second projections ~130

Fig. 3

30

32 34

Fig. 4

Fig. 5a

Fig. 5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHENG ZHIWEI et al.** Improved projection-based energy weighting for spectral CT. *RADIATION DETECTION TECHNOLOGY AND METHODS*, 01 September 2019, vol. 3 (3)